# EUROPÄISCHE PATENTSCHRIFT

(11) **EP 2 852 869 B1**
(45) Veröffentlichungstag und Bekanntmachung des Hinweises auf die Patenterteilung: **21.08.2019**
(21) Anmeldenummer: 13731303.7
(22) Anmeldetag: 11.06.2013
(51) Int. Cl.: G05B 23/02, G05B 9/02, G05B 19/418, B61L 25/08, G06T 1/00, G06F 11/30

(54) **PROZESSABBILD EINER TECHNISCHEN ANLAGE, INSBESONDERE EINER EISENBAHNGLEISANLAGE**
PROCESS IMAGE OF A TECHNICAL SYSTEM, IN PARTICULAR A RAILWAY TRACK SYSTEM
SCHÉMA DE PROCESSUS D'UNE INSTALLATION TECHNIQUE, EN PARTICULIER D'UNE INSTALLATION DE VOIES DE CHEMIN DE FER

(30) Priorität: 16.07.2012 DE 102012212386
(43) Veröffentlichungstag der Anmeldung: 01.04.2015
(73) Patentinhaber: Siemens Mobility GmbH, 81739 München (DE)
(72) Erfinder: WEITNER-VON PEIN, Achim, 38126 Braunschweig (DE)
(86) Internationale Anmeldenummer: PCT/EP2013/062029
(87) Internationale Veröffentlichungsnummer: WO 2014/012714

(56) Entgegenhaltungen:
- EP-A2- 1 757 906
- DE-A1- 3 409 059
- DE-A1- 19 825 257
- DE-A1-102010 023 891
- US-A1- 2007 174 619
- US-A1- 2010 215 342

## Beschreibung

Die Erfindung bezieht sich auf ein Verfahren zum Erzeugen eines Prozessabbildes einer technischen Anlage, insbesondere einer Eisenbahngleisanlage, wobei bei dem Verfahren auf einer Anzeigeeinrichtung Bildobjekte angezeigt werden, die jeweils eine Komponente oder einen Abschnitt der technischen Anlage sowie deren jeweiligen Zustand visualisieren.

Derartige Verfahren werden beispielsweise in Leitstellen oder Stellwerken für Eisenbahngleisanlagen eingesetzt.

Aus der Druckschrift DE 34 09 059 A1 ist ein derartiges gattungsgemäßes Verfahren bekannt. Bei diesem dient eine Anzeigeeinrichtung in Form eines Anzeigemediums einer Bedieneinrichtung zur bildlichen Darstellung der geographischen Anordnung und des aktuellen Zustands von Steuer- und Überwachungselementen einer Eisenbahnsignalanlage. Dabei ist zur Eingabe von Steuerinformationen mindestens ein mit einem Decodierer verbundener optisch oder magnetisch arbeitender Strichcode-Leser vorgesehen, wobei ein zur Ansteuerung der einzelnen Steuerelemente erforderlicher Strichcode auf dem Anzeigemedium oder auf einer besonderen, ein vereinfachtes Abbild der Eisenbahnanlage tragenden Bedientafel den einzelnen dort dargestellten Steuerelementen räumlich zugeordnet angebracht ist. Die Anbringung des Strichcodes auf dem Anzeigemedium bzw. auf der besonderen Bedientafel erfolgt mittels eines geeigneten Trägers, z. B. einer selbstklebenden, leicht auswechselbaren Kunstofffolie.

Ferner ist aus der Druckschrift US 2010/0215342 A1 ein Verfahren bekannt, bei dem zum Reproduzieren von Videos eine Wasserzeichen-Einsetz-Funktion genutzt wird. Dabei werden Wasserzeichendaten generiert, die Informationen über die Reproduktion eines Original-Videos angeben. Mittels eines On-Screen-Display Datenmischers oder eines Grafikdatenmischers einer Video-Reproduzier-Vorrichtung werden die Wasserzeichendaten und das Original-Video synthetisiert.

Der Erfindung liegt die Aufgabe zugrunde, ein Verfahren zum Erzeugen eines Prozessabbildes anzugeben, das sich einfach auswerten und kontrollieren lässt.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass mittels einer Recheneinrichtung zumindest eines der Bildobjekte mit einem zweidimensionalen Codesymbol versehen wird, das die von dem Bildobjekt dargestellte Komponente oder den von dem Bildobjekt dargestellten Abschnitt innerhalb der technischen Anlage eindeutig identifiziert und den Zustand der dargestellten Komponente oder des dargestellten Abschnitts anzeigt, indem das Bildobjekt durch Pixel mit jeweils vorgegebener Farbe und Helligkeit gebildet wird, indem die Pixel des Bildobjekts farblich und/oder helligkeitsmäßig jeweils mit einer vorgegebenen Anzahl an Bits definiert werden, und das Codesymbol in das Bildobjekt integriert wird, indem Pixel des Bildobjekts hinsichtlich der Farbe und/oder Helligkeit modifiziert werden, indem für jedes Pixel des Codesymbols - jeweils ausgehend von den ursprünglichen Pixelparametern des Bildobjekts - eine vorgegebene Anzahl an Bits geändert wird.

Ein wesentlicher Vorteil des erfindungsgemäßen Verfahrens ist darin zu sehen, dass dieses eine einfache und schnelle maschinelle Erkennung von auf der Anzeigeeinrichtung dargestellten Bildobjekten, beispielsweise zu Kontrollzwecken, ermöglicht. Dies ist auf die erfindungsgemäß vorgesehene Verwendung zweidimensionaler Codesymbole zurückzuführen, die in den Bildobjekten integriert sind und die Bildobjekte selbst beschreiben. Mit anderen Worten erfolgt bei dem erfindungsgemäßen Verfahren eine redundante bzw. doppelte Darstellung des Prozessabbildes, nämlich sowohl durch die vom menschlichen Auge interpretierbaren Bildobjekte als auch darüber hinaus durch die zweidimensionalen Codesymbole, die eigenständig und selbständig das Prozessabbild - ganz oder abschnittsweise - ein weiteres Mal beschreiben. Aufgrund der doppelten Anzeige ist es möglich, die Bildobjekte alternativ anhand der zweidimensionalen Codesymbole maschinell auszuwerten und die dargestellten Komponenten bzw. die dargestellten Abschnitte der technischen Anlage - beispielsweise zur Überprüfung der Anzeige - zu ermitteln.

Als besonders vorteilhaft wird es angesehen, dass die zweidimensionalen Codesymbole nicht nur die dargestellte Komponente oder den dargestellten Abschnitt der technischen Anlage eindeutig identifizieren, sondern zusätzlich jeweils auch den Zustand der Komponente bzw. des Abschnitts. Bei einer solchen Ausgestaltung enthalten die zweidimensionalen Codesymbole also jeweils zwei Informationen, nämlich zum einen eine Information zur Identifizierung der jeweiligen Komponente bzw. des Abschnitts und zum anderen eine Information über den jeweiligen Zustand der Komponente bzw. des Abschnitts.

Dadurch, dass das Bildobjekt durch Pixel mit jeweils vorgegebener Farbe und Helligkeit gebildet wird, indem die Pixel des Bildobjekts farblich und/oder helligkeitsmäßig jeweils mit einer vorgegebenen Anzahl an Bits definiert werden, und dadurch, dass das Codesymbol in das Bildobjekt integriert wird, indem Pixel des Bildobjekts hinsichtlich der Farbe und/oder Helligkeit modifiziert werden, indem für jedes Pixel des Codesymbols - jeweils ausgehend von den ursprünglichen Pixelparametern des Bildobjekts - eine vorgegebene Anzahl an Bits geändert wird, kann vermieden werden, dass das oder die zweidimensionalen Codesymbole als störend empfunden werden oder von einer Interpretation des für den menschlichen Betrachter bestimmten Bildinhalts der Bildobjekte ablenken. Das Codesymbol lässt sich somit besonders einfach und damit vorteilhaft in dem Bildobjekt für das menschliche Auge verstecken.

Als vorteilhaft wird es angesehen, wenn die Pixel des Bildobjekts farblich jeweils durch zumindest drei miteinander gemischte Grundfarben definiert werden, wobei die Helligkeit jeder Grundfarbe jeweils mit einer vorgegebenen Anzahl an Helligkeitsstufen beschrieben wird, und das Codesymbol in das Bildobjekt integriert wird, indem für jedes Pixel des Codesymbols - jeweils ausgehend von den ursprünglichen Pixelparametern des zugeordneten Pixels des Bildobjekts - bei zumindest einer der Grundfarben die Helligkeit um eine vorgegebene Anzahl an Helligkeitsstufen geändert wird.

Vorzugsweise wird das Codesymbol in das Bildobjekt integriert, indem für jedes Pixel des Codesymbols - jeweils ausgehend von den ursprünglichen Pixelparametern des zugeordneten Pixels des Bildobjekts - bei zumindest einer der Grundfarben die Helligkeit um genau eine Helligkeitsstufe geändert wird.

Darüber hinaus kann vorgesehen sein, dass für jedes Pixel des Codesymbols - jeweils für zumindest eine Grundfarbe und jeweils ausgehend von den ursprünglichen Pixelparametern des zugeordneten Pixels des Bildobjekts - genau ein die Helligkeit der jeweiligen Grundfarbe beschreibendes Bit, insbesondere das niederwertigste Bit, geändert wird.

Darüber hinaus wird es als vorteilhaft angesehen, wenn mindestens zwei Codesymbole in das Bildobjekt integriert werden, und zwar an diagonal gegenüberliegenden Randbereichen des Bildobjekts. Bei einer solchen Anordnung zweier Codesymbole lässt sich nämlich erreichen, dass anhand des Abstandes der mindestens zwei Codesymbole die Größe des Bildobjekts und/oder dessen randseitige Begrenzung erkannt wird.

Im Übrigen kann anhand der Größe des Codesymbols der ZoomFaktor des Bildobjekts und/oder der des Prozessabbildes bestimmt werden.

Um ein korrektes Erkennen und Auslesen der Codesymbole zu erreichen, wird es als vorteilhaft angesehen, wenn das oder die Codesymbole jeweils mit einem Prüfcode zur Fehlererkennung und/oder Fehlerbehebung versehen werden.

Vorzugsweise ist der zweidimensionale Code ein gestapelter Code, ein Matrix-Code oder ein Punktcode, insbesondere ein "Codablock"-Code, ein "Code 49"-Code, ein "PDF417"-Code, ein "QR"-Code, ein "DataMatrix"-Code, ein "MaxiCode"-Code oder ein "Aztec"-Code.

Besonders vorteilhaft lässt sich das beschriebene Verfahren zum Anzeigen des Prozessabbildes einer Eisenbahngleisanlage einsetzen. Demgemäß wird es als vorteilhaft angesehen, wenn ein eine Weiche einer Eisenbahnanlage, ein Signal einer Eisenbahnanlage oder einen Gleisabschnitt einer Eisenbahnanlage visualisierendes Bildobjekt mit einem zweidimensionalen Codesymbol versehen wird.

Die in den Bildobjekten integrierten Codesymbole ermöglichen es in vorteilhafter Weise, die auf der Anzeigeeinrichtung dargestellten Bildobjekte hinsichtlich ihrer Korrektheit - beispielsweise maschinell - zu überprüfen. Mit Blick auf eine solche Überprüfung wird es als vorteilhaft angesehen, wenn die Pixelinformationen zu den auf der Anzeigeeinrichtung anzuzeigenden Pixeln des mit dem zumindest einen Codesymbol versehenen Bildobjekts in einem Bildspeicher, insbesondere einem Bildspeicher einer Graphikkarte, gespeichert werden und zur Anzeige auf der Anzeigeeinrichtung gebracht werden, die Pixelinformationen aus dem Bildspeicher wieder ausgelesen werden, das Codesymbol für das Bildobjekt in den ausgelesenen Pixelinformationen erkannt wird und ein Fehlersignal erzeugt wird, wenn das rückgelesene Codesymbol von dem Codesymbol, das in den Bildspeicher übertragen werden sollte, abweicht.

Die Erfindung bezieht sich darüber hinaus auf eine Anordnung mit einer Recheneinrichtung zum Erzeugen eines Prozessabbildes einer technischen Anlage, insbesondere einer Eisenbahngleisanlage, und einer mit der Recheneinrichtung in Verbindung stehenden Anzeigeeinrichtung zum Anzeigen von Bildobjekten, die jeweils eine Komponente oder einen Abschnitt der technischen Anlage sowie deren jeweiligen Zustand visualisieren.

Erfindungsgemäß ist bezüglich einer solchen Anordnung vorgesehen, dass die Recheneinrichtung derart ausgestaltet ist, dass zumindest eines der Bildobjekte mit einem zweidimensionalen Codesymbol versehen wird, das die von dem Bildobjekt dargestellte Komponente oder den von dem Bildobjekt dargestellten Abschnitt eindeutig identifiziert und den Zustand der dargestellten Komponente oder des dargestellten Abschnitts anzeigt, indem das Bildobjekt durch Pixel mit jeweils vorgegebener Farbe und Helligkeit gebildet wird, indem die Pixel des Bildobjekts farblich und/oder helligkeitsmäßig jeweils mit einer vorgegebenen Anzahl an Bits definiert werden, und das Codesymbol in das Bildobjekt integriert wird, indem Pixel des Bildobjekts hinsichtlich der Farbe und/oder Helligkeit modifiziert werden, indem für jedes Pixel des Codesymbols - jeweils ausgehend von den ursprünglichen Pixelparametern des Bildobjekts - eine vorgegebene Anzahl an Bits geändert wird.

Bezüglich der Vorteile der erfindungsgemäßen Anordnung sei auf die obigen Ausführungen im Zusammenhang mit dem erfindungsgemäßen Verfahren verwiesen, da die Vorteile des erfindungsgemäßen Verfahrens denen der erfindungsgemäßen Anordnung entsprechen.

Als vorteilhaft wird es angesehen, wenn eine Kontrolleinrichtung vorhanden ist, die derart ausgestaltet ist, dass sie das in dem Bildobjekt enthaltene Codesymbol erkennt und den durch das Codesymbol angegebenen Zustand der dargestellten Komponente oder des dargestellten Abschnitts mit dem tatsächlichen Zustand der dargestellten Komponente oder des dargestellten Abschnitts vergleicht und ein Fehlersignal erzeugt, wenn die Zustände voneinander abweichen.

Die Erfindung wird nachfolgend anhand von Ausführungsbeispielen näher erläutert; dabei zeigen beispielhaft
- Figur 1: ein Ausführungsbeispiel für eine Anordnung zum Erzeugen eines Prozessabbildes einer technischen Anlage,
- Figur 2: ein Ausführungsbeispiel für ein mit zwei Codesymbolen versehenes Bildobjekt,
- Figur 3: ein weiteres Ausführungsbeispiel für ein mit zwei Codesymbolen versehenes Bildobjekt,
- Figur 4: ein Ausführungsbeispiel für ein mit einem Codesymbol versehenes Bildobjekt, wobei sich das Codesymbol über das Bildobjekt ganzflächig erstreckt, und
- Figur 5: ein weiteres Ausführungsbeispiel für eine Anordnung zum Erzeugen eines Prozessabbildes einer technischen Anlage.

In den Figuren werden der Übersicht halber für identische oder vergleichbare Komponenten stets dieselben Bezugszeichen verwendet.

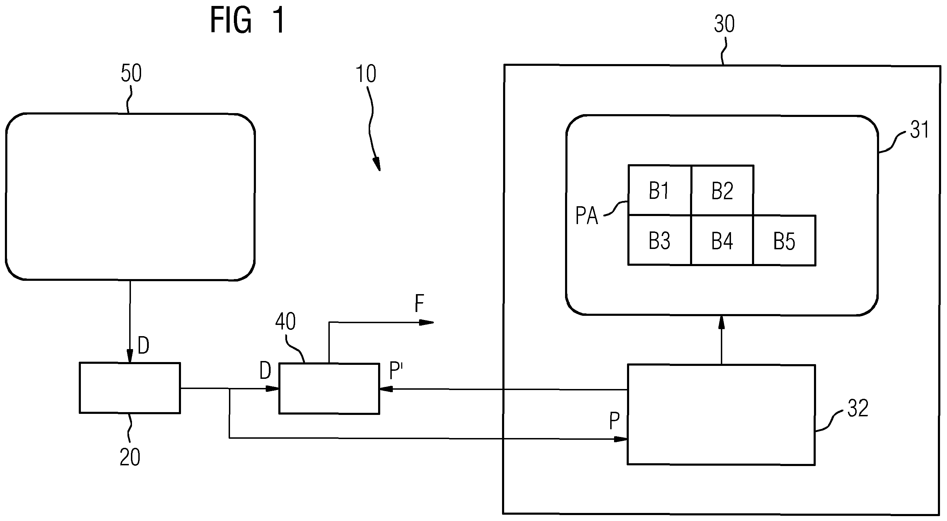

In der Figur 1 sieht man eine Anordnung 10 zum Erzeugen eines Prozessabbildes PA einer technischen Anlage. Die Anordnung umfasst eine Recheneinrichtung 20, eine Anzeigeeinrichtung 30 sowie eine Kontrolleinrichtung 40. Die Anzeigeeinrichtung 30 weist einen Bildschirm 31 zur Darstellung des Prozessabbildes PA sowie einen Bildspeicher 32 auf, in dem Pixelinformationen P zu den auf dem Bildschirm 31 anzuzeigenden Pixeln abgespeichert werden.

In der Figur 1 lässt sich erkennen, dass die Recheneinrichtung 20 mit einer Eisenbahngleisanlage 50 in Verbindung steht und von dieser Zustandsdaten D erhält, die den jeweiligen Zustand der Eisenbahngleisanlage 50 definieren.

Die Anordnung 10 gemäß Figur 1 kann beispielsweise wie folgt betrieben werden:
Die Recheneinrichtung 20 wertet die Zustandsdaten D der Eisenbahngleisanlage 50 aus und ermittelt mit diesen die Pixelinformationen P, die zum Anzeigen des den jeweiligen Zustand der Eisenbahngleisanlage 50 wiedergebenden Prozessabbildes PA geeignet bzw. notwendig sind. Die Pixelinformationen P werden im Bildspeicher 32 abgelegt und gelangen von dort zum Bildschirm 31, der die Pixelinformationen P anzeigt.

Die Recheneinrichtung 20 wird die Pixelinformationen P derart erzeugen, dass das Prozessabbild PA auf dem Bildschirm 31 in Form von Bildobjekten B1, B2, B3, B4 und B5 dargestellt wird. Jedes der Bildobjekte B1 bis B5 visualisiert jeweils eine Komponente oder einen Abschnitt der Eisenbahngleisanlage 50 sowie den jeweiligen Zustand der dargestellten Komponente bzw. des dargestellten Abschnitts.

Um sicherzustellen, dass die in dem Bildspeicher 32 abgespeicherten Pixelinformationen P tatsächlich mit den Pixelinformationen identisch sind, die die Recheneinrichtung 20 auf dem Bildschirm 31 zur Anzeige bringen will, ist die Kontrolleinrichtung 40 vorgesehen. Die Kontrolleinrichtung 40 liest die in dem Bildspeicher 32 abgespeicherten Pixelinformationen aus (vgl. Bezugszeichen P' in Figur 1) und vergleicht diese mit den Zustandsdaten D, die den Zustand der Eisenbahngleisanlage 50 angeben. Die Zustandsdaten D erhält die Kontrolleinrichtung 40 bei dem Ausführungsbeispiel gemäß Figur 1 von der Recheneinrichtung 20.

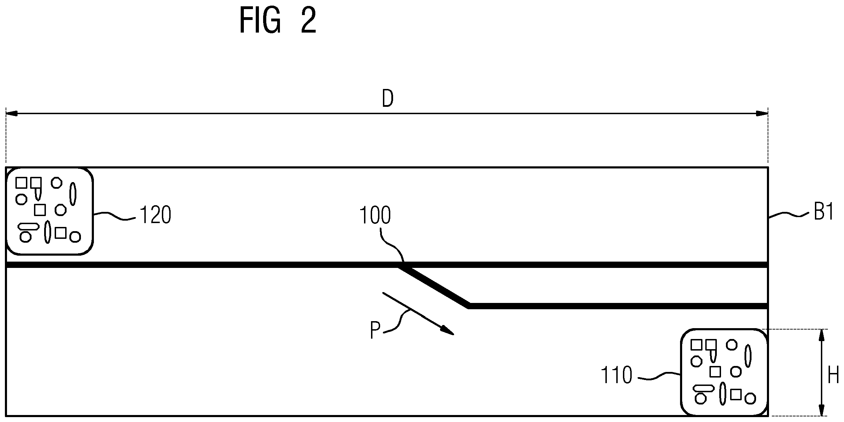

Die Kontrolleinrichtung 40 kann die Bildobjekte B1 bis B5 anhand der ausgelesenen Pixelinformationen P' einfach und schnell erkennen, indem sie Codesymbole, die in den Bildobjekten B1 bis B5 integriert sind, identifiziert. Die Codesymbole sind aus Gründen der Übersicht in der Figur 1 nicht näher dargestellt, sie werden im Zusammenhang mit den Figuren 2 bis 4 nachfolgend beispielhaft im Detail erläutert.

Die Kontrolleinrichtung 40 erkennt anhand der Codesymbole also die Bildobjekte B1 bis B5 und kann damit die dargestellten Komponenten bzw. die dargestellten Abschnitte der Eisenbahngleisanlage 50 sowie deren Zustand erkennen, der von dem Prozessabbild PA auf dem Bildschirm 31 angezeigt wird. Die Kontrolleinrichtung 40 hat somit Gelegenheit, den dargestellten Zustand der Eisenbahngleisanlage mit dem tatsächlichen Zustand zu vergleichen, der durch die Zustandsdaten D definiert ist. Im Rahmen des Vergleichs des Zustands gemäß den Zustandsdaten D mit dem Zustand, der sich aus den rückgelesenen Pixelinformationen P' bzw. aus den erkannten Bildobjekten B1 bis B5 ergibt, ist es der Kontrolleinrichtung 40 möglich, ein Fehlersignal F zu erzeugen, falls sie beim Vergleich der Zustände feststellt, dass das auf dem Bildschirm 31 dargestellte Prozessabbild PA nicht den Zustandsdaten D und damit dem tatsächlichen Zustand der Eisenbahngleisanlage 50 entspricht.

Das Fehlersignal F der Kontrolleinrichtung 40 kann beispielsweise zu der Recheneinrichtung 20 übertragen werden, um diese zu warnen oder zu deaktivieren und so zu vermeiden, dass eine Bedienperson an der Recheneinrichtung 20 infolge eines falsch abgebildeten Prozessabbildes PA eine ungewollte Veränderung der Eisenbahngleisanlage 50 durch die Eingabe von Stellbefehlen veranlasst.

Die Figur 2 zeigt ein Ausführungsbeispiel für das auf dem Bildschirm 31 gemäß Figur 1 dargestellte Bildobjekt B1. Es lässt sich erkennen, dass das Bildobjekt B1 eine Weiche 100 visualisiert. Der Schaltzustand der Weiche 100 kann durch eine geeignete farbliche Darstellung und/oder durch zusätzliche grafische Elemente kenntlich gemacht werden, beispielsweise durch einen Pfeil P, wie er in der Figur 2 dargestellt ist.

Zusätzlich zu der Weiche 100 stellt das Bildobjekt B1 zwei zweidimensionale Codesymbole 110 und 120 dar, von denen mindestens eines, vorzugsweise beide, jeweils die dargestellte Komponente, hier also die Weiche 100, eindeutig identifizieren sowie die jeweilige Stellung der Weiche 100 angeben.

Bei dem Ausführungsbeispiel gemäß Figur 2 sind die beiden Codesymbole 110 und 120 an diagonal gegenüberliegenden Seiten des Bildobjekts B1 angeordnet. Durch eine solche Anordnung wird die Größe des Bildobjekts B1 eindeutig definiert, da sich aus dem Abstand D der Außenkanten der beiden Codesymbole die Bildobjektgrenzen des Bildobjekts B1 ableiten lassen.

Durch die Darstellung der äußeren Grenzen des Bildobjekts B1 wird es der Kontrolleinrichtung 40 vereinfacht, die Bildobjekte B1 bis B5 in den ausgelesenen Pixelinformationen P' zu trennen und diese einzeln und jeweils für sich auszuwerten.

Die beiden Codesymbole 110 und 120 ermöglichen es der Kontrolleinrichtung 40 darüber hinaus, den Zoomzustand des Bildobjekts B1 quantitativ zu ermitteln. So muss die Kontrolleinrichtung 40 lediglich die Größe, beispielsweise die Höhe H der Codesymbole 110 bzw. 120 anhand der ausgelesenen Pixelinformationen P' identifizieren, um die Größe des Bildobjekts B1 auf dem Bildschirm 31 berechnen zu können.

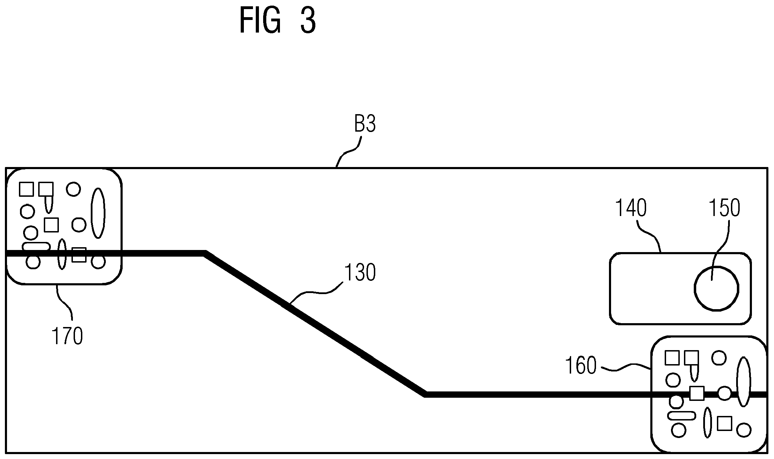

Die Figur 3 zeigt ein Ausführungsbeispiel für das Bildobjekt B3, das auf dem Bildschirm 31 gemäß Figur 1 dargestellt ist. Das Bildobjekt B3 stellt einen Streckenabschnitt 130 der Gleisanlage 50 sowie ein zu dem Streckenabschnitt 130 gehörendes Signal 140 der Eisenbahngleisanlage 50 dar. Das Signal 140 enthält ein Signalelement 150, das den Signalzustand des Signals 140 anzeigt. Beispielsweise kann das Signal 140 anzeigen, dass der Streckenabschnitt 130 gesperrt oder zur Weiterfahrt bzw. Durchfahrt freigegeben ist.

Das Bildobjekt B3 weist darüber hinaus zwei Codesymbole 160 und 170 auf, die an zwei gegenüberliegenden Ecken des Bildobjekts B3 angeordnet sind und es ermöglichen, die äußeren Ränder des Bildobjekts B3 besonders einfach zu identifizieren sowie den Zoomfaktor des dargestellten Bildobjekts B3 zu messen.

Die Figur 3 zeigt darüber hinaus, dass sich die beiden Codesymbole 160 und 170 mit dem dargestellten Streckenabschnitt 130 teilweise überlagern bzw. sich mit diesem überschneiden.

Ein solches Überschneiden der Codesymbole mit dem Streckenabschnitt 130 ist jedoch bei dem Bildobjekt B3 unproblematisch, da die beiden Codesymbole 160 und 170 derart in das Bildobjekt B3 integriert sind, dass sie für das menschliche Auge mangels ausreichenden Kontrasts nicht erkennbar sind. Eine solche nicht erkennbare Integration der beiden Codesymbole 160 und 170 lässt sich beispielsweise erreichen, indem zur Darstellung der Codesymbole die Pixel des Bildobjekts B3 hinsichtlich der Farbe und/oder Helligkeit nur so leicht modifiziert werden, dass die Codesymbole in dem Bildobjekt B3 auf der Anzeigeeinrichtung 31 gemäß Figur 1 dem menschlichen Auge mangels Kontrast nicht auffallen. Dennoch ist eine Erkennbarkeit der beiden Codesymbole 160 und 170 durch die Kontrolleinrichtung 40 gegeben, da diese die Modifikation der Pixel des Bildobjekts B3 in den ausgelesenen Pixelinformationen P' ohne weiteres feststellen kann und wird, denn die Pixelinformationen P' sind durch Zahlen, beispielsweise binäre, dezimale, hexadezimale oder sonstige Zahlen oder Angaben definiert, so dass lokale Modifikationen durch simplen Zahlenvergleich feststellbar sind.

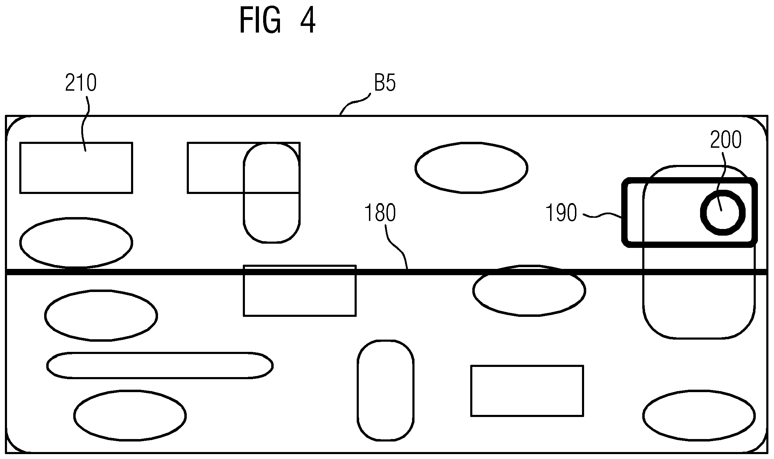

Die Figur 4 zeigt ein Ausführungsbeispiel für das Bildobjekt B5, das auf dem Bildschirm 31 gemäß Figur 1 dargestellt wird. Es lässt sich erkennen, dass das Bildobjekt B5 einen Streckenabschnitt 180 sowie ein zu diesem Streckenabschnitt 180 gehörendes Signal 190 darstellt. Das Signal 190 weist ein Signalelement 200 auf, das den Signalzustand des Signals 190 auf dem Bildschirm 31 visualisiert.

Die Figur 4 lässt darüber hinaus ein Codesymbol 210 erkennen, das in das Bildobjekt B5 derart integriert ist, dass es sich mit dem dargestellten Streckenabschnitt 180 sowie dem Signal 190 komplett überschneidet. Die Integration des Codesymbols 210 ist jedoch derart gewählt, dass das Codesymbol 210 für das menschliche Auge mangels Kontrast auf dem Bildschirm 31 nicht erkennbar ist; das menschliche Auge kann lediglich den dargestellten Streckenabschnitt 180, das Signal 190 sowie das Signalelement 200 erkennen. Eine solche "unsichtbare" Integration des Codesymbols 210 in das Bildobjekt B5 ist möglich, wenn die Pixel des Bildobjekts B5 zur Integration des Codesymbols 210 bezüglich Farbe und/oder Helligkeit lediglich derart geringfügig modifiziert werden, dass ein menschliches Auge die Veränderung der Pixel auf der Anzeigeeinrichtung 30 nicht bzw. nicht ohne weiteres wegen fehlenden Kontrasts erkennen kann.

Die Größe des Bildobjekts B5 und der Zoomfaktor des Bildobjekts B5 können von der Kontrolleinrichtung 40 in einfacher Weise ermittelt werden, indem beispielsweise die Größe des integrierten Codesymbols 210 ausgewertet wird.

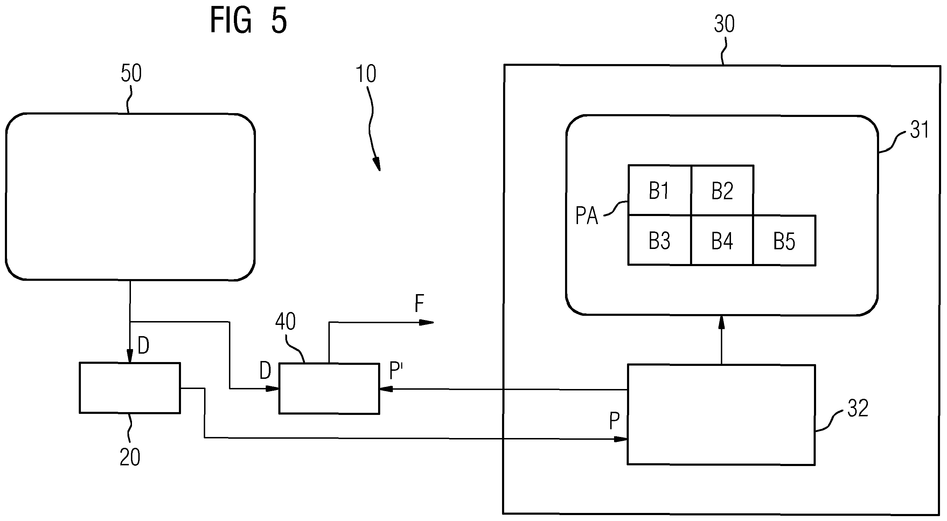

Die Figur 5 zeigt ein zweites Ausführungsbeispiel für eine Anordnung 10, mit der sich ein Prozessabbild PA einer Eisenbahngleisanlage 50 darstellen lässt.

Die Anordnung 10 gemäß Figur 5 entspricht im Wesentlichen der Anordnung 10 gemäß Figur 1, so dass die obigen Ausführungen im Zusammenhang mit der Figur 1 hier entsprechend gelten. Im Unterschied zu dem Ausführungsbeispiel gemäß Figur 1 erhält die Kontrolleinrichtung 40 die Zustandsdaten D, die den Zustand der Eisenbahngleisanlage 50 angeben, nicht mittelbar über die Recheneinrichtung 20, sondern auf separatem Wege unmittelbar von der Eisenbahngleisanlage 50.

Dies ermöglicht es der Kontrolleinrichtung 40, den Zustand der Eisenbahngleisanlage selbst auszuwerten und diesen mit dem Zustand, der durch die in den ausgelesenen Pixelinformationen P' enthaltenen Codesymbolen beschrieben ist, zu vergleichen.

Beispielsweise kann die Kontrolleinrichtung 40 selbst Bildobjekte und/oder Codesymbole bilden, die den Zustand der Eisenbahngleisanlage 50 abbilden, und die selbst gebildeten Bildobjekte und/oder Codesymbole mit den anhand der ausgelesenen Pixelinformationen P' und den darin erkannten Bildobjekten und/oder Codesymbolen vergleichen.

Wird bei einem solchen Vergleich festgestellt, dass sich der tatsächliche Zustand von dem Zustand gemäß den ausgelesenen Pixelinformationen P' unterscheidet, so kann die Kontrolleinrichtung 40 ein Fehlersignal F erzeugen, wie dies bereits im Zusammenhang mit der Figur 1 erläutert wurde.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Anordnung
- 20: Recheneinrichtung
- 30: Anzeigeeinrichtung
- 31: Bildschirm
- 32: Bildspeicher
- 40: Kontrolleinrichtung
- 50: Eisenbahngleisanlage
- 100: Weiche
- 110: Codesymbol
- 120: Codesymbol
- 130: Streckenabschnitt
- 140: Signal
- 150: Signalelement
- 160: Codesymbol
- 170: Codesymbol
- 180: Streckenabschnitt
- 190: Signal
- 200: Signalelement
- 210: Codesymbol

- B1-B5: Bildobjekte
- D: Zustandsdaten
- F: Fehlersignal
- H: Höhe
- P: Pfeil
- P: Pixelinformation
- P': Pixelinformation
- PA: Prozessabbild

## Patentansprüche

1. Verfahren zum Erzeugen eines Prozessabbildes (PA) einer technischen Anlage, insbesondere einer Eisenbahngleisanlage (50), wobei bei dem Verfahren auf einer Anzeigeeinrichtung (30) Bildobjekte (B1-B5) angezeigt werden, die jeweils eine Komponente (100, 130, 180) oder einen Abschnitt der technischen Anlage sowie deren jeweiligen Zustand visualisieren,
**dadurch gekennzeichnet, dass**
mittels einer Recheneinrichtung (20) zumindest eines der Bildobjekte (B1-B5) mit einem zweidimensionalen Codesymbol (110, 120, 160, 170, 210) versehen wird, das die von dem Bildobjekt (B1-B5) dargestellte Komponente (100, 130, 180) oder den von dem Bildobjekt (B1-B5) dargestellten Abschnitt innerhalb der technischen Anlage eindeutig identifiziert und den Zustand der dargestellten Komponente (100, 130, 180) oder des dargestellten Abschnitts anzeigt, indem
- das Bildobjekt (B1-B5) durch Pixel mit jeweils vorgegebener Farbe und Helligkeit gebildet wird, indem die Pixel des Bildobjekts (B1-B5) farblich und/oder helligkeitsmäßig jeweils mit einer vorgegebenen Anzahl an Bits definiert werden, und
- das Codesymbol (110, 120, 160, 170, 210) in das Bildobjekt (B1-B5) integriert wird, indem Pixel des Bildobjekts (B1-B5) hinsichtlich der Farbe und/oder Helligkeit modifiziert werden, indem für jedes Pixel des Codesymbols (110, 120, 160, 170, 210) - jeweils ausgehend von den ursprünglichen Pixelparametern des Bildobjekts (B1-B5) - eine vorgegebene Anzahl an Bits geändert wird.

2. Verfahren nach Anspruch 1,
**dadurch gekennzeichnet, dass**
- die Pixel des Bildobjekts (B1-B5) farblich jeweils durch zumindest drei miteinander gemischte Grundfarben definiert werden, wobei die Helligkeit jeder Grundfarbe jeweils mit einer vorgegebenen Anzahl an Helligkeitsstufen beschrieben wird, und
- das Codesymbol (110, 120, 160, 170, 210) in das Bildobjekt (B1-B5) integriert wird, indem für jedes Pixel des Codesymbols (110, 120, 160, 170, 210) - jeweils ausgehend von den ursprünglichen Pixelparametern des zugeordneten Pixels des Bildobjekts (B1-B5) - bei zumindest einer der Grundfarben die Helligkeit um eine vorgegebene Anzahl an Helligkeitsstufen geändert wird.

3. Verfahren nach Anspruch 2,
**dadurch gekennzeichnet, dass**
das Codesymbol (110, 120, 160, 170, 210) in das Bildobjekt (B1-B5) integriert wird, indem für jedes Pixel des Codesymbols (110, 120, 160, 170, 210) - jeweils ausgehend von den ursprünglichen Pixelparametern des zugeordneten Pixels des Bildobjekts (B1-B5) - bei zumindest einer der Grundfarben die Helligkeit um genau eine Helligkeitsstufe geändert wird.

4. Verfahren nach einem der voranstehenden Ansprüche,
**dadurch gekennzeichnet, dass**
für jedes Pixel des Codesymbols (110, 120, 160, 170, 210) - jeweils für zumindest eine Grundfarbe und jeweils ausgehend von den ursprünglichen Pixelparametern des zugeordneten Pixels des Bildobjekts (B1-B5) - genau ein die Helligkeit der jeweiligen Grundfarbe beschreibendes Bit, insbesondere das niederwertigste Bit, geändert wird.

5. Verfahren nach einem der voranstehenden Ansprüche,
**dadurch gekennzeichnet, dass**
mindestens zwei Codesymbole (110, 120, 160, 170, 210) in das Bildobjekt (B1-B5) integriert werden, und zwar an diagonal gegenüberliegenden Randbereichen des Bildobjekts.

6. Verfahren nach Anspruch 5,
**dadurch gekennzeichnet, dass**
anhand des Abstandes der mindestens zwei Codesymbole (110, 120, 160, 170, 210) die Größe des Bildobjekts (B1-B5) und/oder dessen randseitige Begrenzung erkannt wird.

7. Verfahren nach einem der voranstehenden Ansprüche,
**dadurch gekennzeichnet, dass**
der zweidimensionale Code ein gestapelter Code, ein Matrix-Code oder ein Punktcode ist, insbesondere ein "Codablock"-Code, ein "Code 49"-Code, ein "PDF417"-Code, ein "QR"-Code, ein "DataMatrix"-Code, ein "MaxiCode"-Code oder ein "Aztec"-Code.

8. Verfahren nach einem der voranstehenden Ansprüche,
**dadurch gekennzeichnet, dass**
ein eine Weiche (100) einer Eisenbahnanlage (50), ein Signal (140, 190) einer Eisenbahngleisanlage (50) oder einen Gleisabschnitt (130, 180) einer Eisenbahngleisanlage (50) visualisierendes Bildobjekt (B1-B5) mit einem zweidimensionalen Codesymbol (110, 120, 160, 170, 210) versehen wird.

9. Verfahren nach einem der voranstehenden Ansprüche,
**dadurch gekennzeichnet, dass**
- die Pixelinformationen (P) zu den auf der Anzeigeeinrichtung (30) anzuzeigenden Pixeln des mit dem zumindest einen Codesymbol (110, 120, 160, 170, 210) versehenen Bildobjekts (B1-B5) in einem Bildspeicher, insbesondere einem Bildspeicher (32) einer Graphikkarte, gespeichert werden und zur Anzeige auf der Anzeigeeinrichtung (30) gebracht werden,
- die Pixelinformationen (P') aus dem Bildspeicher (32) wieder ausgelesen werden,
- das Codesymbol (110, 120, 160, 170, 210) für das Bildobjekt (B1-B5) in den ausgelesenen Pixelinformationen (P') erkannt wird und
- ein Fehlersignal (F) erzeugt wird, wenn das rückgelesene Codesymbol (110, 120, 160, 170, 210) von dem Codesymbol, das in den Bildspeicher übertragen werden sollte, abweicht.

10. Anordnung mit einer Recheneinrichtung (20) zum Erzeugen eines Prozessabbildes (PA) einer technischen Anlage, insbesondere einer Eisenbahngleisanlage (50), und einer mit der Recheneinrichtung (20) in Verbindung stehenden Anzeigeeinrichtung (30) zum Anzeigen von Bildobjekten, die jeweils eine Komponente (100, 130, 180) oder einen Abschnitt der technischen Anlage sowie deren jeweiligen Zustand visualisieren,
**dadurch gekennzeichnet, dass**
die Recheneinrichtung (20) derart ausgestaltet ist, dass zumindest eines der Bildobjekte (B1-B5) mit einem zweidimensionalen Codesymbol (110, 120, 160, 170, 210) versehen wird, das die von dem Bildobjekt (B1-B5) dargestellte Komponente (100, 130, 180) oder den von dem Bildobjekt (B1-B5) dargestellten Abschnitt eindeutig identifiziert und den Zustand der dargestellten Komponente (100, 130, 180) oder des dargestellten Abschnitts anzeigt, indem
- das Bildobjekt (B1-B5) durch Pixel mit jeweils vorgegebener Farbe und Helligkeit gebildet wird, indem die Pixel des Bildobjekts (B1-B5) farblich und/oder helligkeitsmäßig jeweils mit einer vorgegebenen Anzahl an Bits definiert werden, und
- das Codesymbol (110, 120, 160, 170, 210) in das Bildobjekt (B1-B5) integriert wird, indem Pixel des Bildobjekts (B1-B5) hinsichtlich der Farbe und/oder Helligkeit modifiziert werden, indem für jedes Pixel des Codesymbols (110, 120, 160, 170, 210) - jeweils ausgehend von den ursprünglichen Pixelparametern des Bildobjekts (B1-B5) - eine vorgegebene Anzahl an Bits geändert wird.

11. Anordnung nach Anspruch 10,
**dadurch gekennzeichnet, dass**
- eine Kontrolleinrichtung (40) vorhanden ist, die derart ausgestaltet ist, dass sie das in dem Bildobjekt (B1-B5) enthaltene Codesymbol (110, 120, 160, 170, 210) erkennt und den durch das Codesymbol (110, 120, 160, 170, 210) angegebenen Zustand der dargestellten Komponente (100, 130, 180) oder des dargestellten Abschnitts mit dem tatsächlichen Zustand der dargestellten Komponente (100, 130, 180) oder des dargestellten Abschnitts vergleicht und ein Fehlersignal erzeugt, wenn die Zustände voneinander abweichen.

## Claims

1. Method for producing a process image (PA) of a technical system, in particular of a railway track system (50), wherein with the method image objects (B1 - B5) are displayed on a display device (30), said image objects each visualising a component (100, 130, 180) or a section of the technical system and its respective state,
**characterised in that**
a computing device (20) provides at least one of the image objects (B1 - B5) with a two-dimensional code symbol (110, 120, 160, 170, 210), which uniquely identifies the component (100, 130, 180) shown by the image object (B1 - B5) or the section within the technical system shown by the image object (B1 - B5) and displays the state of the components (100, 130, 180) shown or the section shown, by
- the image object (B1 - B5) being formed by pixels with in each case a predetermined colour and brightness, by the pixels of the image object (B1 - B5) being defined in terms of colour and/or brightness in each case with a predetermined number of bits, and
- the code symbol (110, 120, 160, 170, 210) being integrated into the image object (B1 - B5), by pixels of the image object (B1 - B5) being modified with respect to colour and/or brightness, by a predetermined number of bits being changed for each pixel of the code symbol (110, 120, 160, 170, 210), in each case based on the original pixel parameters of the image object (B1 - B5).

2. Method according to claim 1,
**characterised in that**
- the pixels of the image object (B1 - B5) are defined by colour in each case by at least three primary colours which are mixed with one another, wherein the brightness of each primary colour is described in each case with a predetermined number of brightness levels, and
- the code symbol (110, 120, 160, 170, 210) is integrated into the image object (B1 - B5), by the brightness being changed by a predetermined number of brightness levels for each pixel of the code symbol (110, 120, 160, 170, 210), in each case based on the original pixel parameters of the assigned pixel of the image object (B1 - B5) with at least one of the primary colours.

3. Method according to claim 2,
**characterised in that**
the code symbol (110, 120, 160, 170, 210) is integrated into the image object (B1 - B5), by the brightness being changed by precisely one brightness level for each pixel of the code symbol (110, 120, 160, 170, 210), in each case based on the original pixel parameters of the assigned pixel of the image object (B1 - B5), with at least one of the primary colours.

4. Method according to one of the preceding claims,
**characterised in that**
precisely one bit describing the brightness of the respective primary colour, in particular the lowest value bit, is changed for each pixel of the code symbol (110, 120, 160, 170, 210), in each case for at least one primary colour and in each case based on the original pixel parameters of the assigned pixel of the image object (B1 - B5).

5. Method according to one of the preceding claims,
**characterised in that** at least two code symbols (110, 120, 160, 170, 210) are integrated into the image object (B1 - B5), namely on diagonally opposing edge regions of the image object.

6. Method according to claim 5, **characterised in that** the size of the image object (B1 - B5) and/or its edge-side boundary is identified on the basis of the distance between the at least two code symbols (110, 120, 160, 170, 210).

7. Method according to one of the preceding claims,
**characterised in that** the two-dimensional code is a stacked code, a matrix code or a point code, in particular a "Codablock" code, a "Code 49" code, a "PDF417" code, a "QR" code, a "DataMatrix" code, a "MaxiCode" code or an "Aztec" code.

8. Method according to one of the preceding claims,
**characterised in that**
an image object (B1 - B5) visualising a point (100) of a railway track system (50), a signal (140, 190) of a railway track system (50) or a track section (130, 180) of a railway track system (5) is provided with a two-dimensional code symbol (110, 120, 160, 170, 210).

9. Method according to one of the preceding claims,
**characterised in that**
- the pixel information (P) relating to the pixels, to be displayed on the display device (30), of the image object (B1 - B5) provided with the at least one code symbol (110, 120, 160, 170, 210) is stored in an image memory, in particular an image memory (32) of a graphics card, and displayed on the display device (30),
- the pixel information (P') is read out again from the image memory (32),
- the code symbol (110, 120, 160, 170, 210) for the image object (B1 - B5) is identified in the read-out pixel information (P') and
- an error signal (F) is generated if the read-back code symbol (110, 120, 160, 170, 210) differs from the code symbol, which is to be transmitted into the image memory.

10. Arrangement with a computing device (20) for generating a process image (PA) of a technical system, in particular of a railway track system (50), and a display device (30) connected to the computing device (20) for displaying image objects, which in each case visualise a component (100, 130, 180) or a section of the technical system and its respective state,
**characterised in that**
the computing device (20) is embodied such that at least one of the image objects (B1 - B5) is provided with a two-dimensional code symbol (110, 120, 160, 170, 210), which uniquely identifies the component (100, 130, 180) shown by the image object (B1 - B5) or the section shown by the image object (B1 - B5) and displays the state of the component (100, 130, 180) or section shown, by
- the image object (B1 - B5) being formed by pixels with in each case a predetermined colour and brightness, by the pixels of the image object (B1 - B5) being defined in terms of colour and/or brightness in each case with a predetermined number of bits, and
- the code symbol (110, 120, 160, 170, 210) being integrated into the image object (B1 - B5) by pixels of the image object (B1 - B5) being modified with respect to colour and/or brightness, by a predetermined number of bits being changed for each pixel of the code symbol (110, 120, 160, 170, 210), in each case based on the original pixel parameters of the image object (B1 - B5).

11. Arrangement according to claim 10,
**characterised in that**
- a control device (40) is present, which is designed so that it identifies the code symbol (110, 120, 160, 170, 210) contained in the image object (B1 - B5) and compares the state of the shown component (100, 130, 180) specified by the code symbol (110, 120, 160, 170, 210) or the shown section with the actual state of the shown component (100, 130, 180) or the shown section and produces an error signal if the states differs from one another.

## Revendications

1. Procédé de production d'une reproduction (PA) de processus d'une installation technique, notamment d'une installation (50) de voie de chemin de fer, dans lequel on affiche dans le procédé, sur un dispositif (30) d'affichage, des objets-images (B1 à B5), qui visualisent chacun un élément (100, 130, 180) ou une partie de l'installation technique, ainsi que leur état respectif,
**caractérisé en ce que**
au moyen d'un dispositif (20) d'ordinateur, on munit au moins l'un des objets-images (B1 à B5) d'un symbole (110, 120, 160, 170, 210) de code en deux dimensions, qui identifie de manière univoque les éléments (100, 130, 180) représentés par l'objet-image (B1 à B5) ou la partie représentée par l'objet-image (B1 à B5) au sein de l'installation technique et affiche l'état de l'élément (100, 130, 180) représenté ou de la partie représentée
- en formant l'objet-image (B1 à B5) par des pixels ayant chacun une couleur et une luminosité données à l'avance, par le fait que les pixels de l'objet-image (B1 à B5) sont définis en couleur et/ou en luminosité par un nombre donné l'avance de bits, et
- en intégrant le symbole (110, 120, 160, 170, 210) de code à l'objet-image (B1 à B5), par le fait que des pixels de l'objet-image (B1 à B5) sont modifiés en ce qui concerne la couleur et/ou la luminosité, en modifiant, pour chaque pixel du symbole (110, 120, 160, 170, 210) de code - en partant respectivement des paramètres de pixels d'origine de l'objet-image (B1 à B5) - un nombre donné à l'avance de bits.

2. Procédé suivant la revendication 1,
**caractérisé en ce que**
- on définit les pixels de l'objet-image (B1 à B5) en couleur, respectivement, par au moins trois couleurs fondamentales mélangées les unes aux autres, la luminosité de chaque couleur fondamentale étant décrite, respectivement, par un nombre donné à l'avance d'échelons de luminosité, et
- on intègre le symbole (110, 120, 160, 170, 210) de code à l'objet-image (B1 à B5), en modifiant pour chaque pixel du symbole (110, 120, 160, 170, 210) de code - en partant respectivement de paramètres de pixels d'origine du pixel associé de l'objet-image (B1 à B5) - pour au moins l'une des couleurs fondamentales, la luminosité d'un nombre donné à l'avance d'échelons de luminosité.

3. Procédé suivant la revendication 2,
**caractérisé**
**en ce que** l'on intègre le symbole (110, 120, 160, 170, 210) de code à l'objet-image (B1 à B5) en modifiant, pour chaque pixel du symbole (110, 120, 160, 170, 210) de code - en partant respectivement des paramètres de pixels d'origine du pixel associé de l'objet-image (B1 à B5) - pour au moins l'une des couleurs fondamentales, la luminosité d'exactement un échelon de luminosité.

4. Procédé suivant l'une des revendications précédentes,
**caractérisé en ce que**
l'on modifie, pour chaque pixel, du symbole (110, 120, 160, 170, 210) de code - respectivement pour au moins une couleur fondamentale et en partant respectivement des paramètres de pixels d'origine du pixel associé de l'objet-image (B1 à B5) - exactement un bit décrivant la luminosité de la couleur fondamentale respective, notamment le bit de poids le plus petit.

5. Procédé suivant l'une des revendications précédentes,
**caractérisé**
**en ce que** l'on intègre au moins deux symboles (110, 120, 160, 170, 210) de code à l'objet-image (B1 à B5), et, en fait, sur des parties de bord opposées en diagonal de l'objet-image.

6. Procédé suivant la revendication 5,
**caractérisé**
**en ce que** l'on détecte, à l'aide de la distance entre les au moins deux symboles (110, 120, 160, 170, 210) de code, la dimension de l'objet-image (B1 à B5) et/ou sa démarcation du côté du bord.

7. Procédé suivant l'une des revendications précédentes,
**caractérisé en ce que**
le code en deux dimensions est un code empilé, un code matrice ou un code point, notamment un code « codablock », un code « code 49 », un code « PDF417 », un code « QR », un code « datamatrice », un code « maxicode » ou un code « aztec ».

8. Procédé suivant l'une des revendications précédentes,
**caractérisé**
**en ce que** l'on munit d'un symbole (110, 120, 160, 170, 210) de code en deux dimensions un objet-image (B1 à B5) visualisant un aiguillage (110) d'une installation (50) de voie de chemin de fer, un signal (140, 190) d'une installation (50) de voie de chemin de fer ou une partie (130, 180) de voie d'une installation (50) de voie de chemin de fer.

9. Procédé suivant l'une des revendications précédentes,
**caractérisé en ce que**
- on mémorise les informations (P) de pixel concernant les pixels à afficher sur le dispositif (30) d'affichage de l'objet-image (B1 à B5) muni du au moins un symbole (110, 120, 160, 170, 210) de code dans une mémoire d'image, notamment dans une mémoire (32) d'image d'une carte graphique et on les porte pour l'affichage sur le dispositif (30) d'affichage,
- on lit à nouveau les informations (P') de pixel dans la mémoire (32) d'image,
- on détecte le symbole (110, 120, 160, 170, 210) de code de l'objet-image (B1 à B5) dans les informations (P') de pixel, qui sont lues et
- on produit un signal (F) de défaut, si le symbole (110, 120, 160, 170, 210) de code relu s'écarte du symbole de code, qui devait être transmis à la mémoire d'image.

10. Système comprenant un dispositif (20) d'ordinateur pour produire une reproduction (PA) de processus d'une installation technique, notamment d'une installation (50) de voie de chemin de fer, et un dispositif (30) d'affichage en liaison avec le dispositif (20) d'ordinateur pour afficher des objets-images, qui visualisent chacun un élément (100, 130, 180) ou une partie de l'installation technique, ainsi que leur état respectif,
**caractérisé en ce que**
le dispositif (20) d'ordinateur est conformé de manière à munir au moins l'un des objets-image (B1 à B5) d'un symbole (110, 120, 160, 170, 210) de code en deux dimensions, qui identifie de manière univoque l'élément (100, 130, 180) représenté par l'objet-image (B1 à B5) ou la partie représentée par l'objet-image (B1 à B5) et qui indique l'état de l'élément (100, 130, 180) représenté ou de la partie représentée,
- en formant l'objet-image (B1 à B5) par des pixels ayant chacun une couleur et une luminosité données à l'avance, par le fait que les pixels de l'objet-image (B1 à B5) sont définis en couleur et/ou en luminosité par un nombre donné l'avance de bits, et
- en intégrant le symbole (110, 120, 160, 170, 210) de code à l'objet-image (B1 à B5), par le fait que des pixels de l'objet-image (B1 à B5) sont modifiés en ce qui concerne la couleur et/ou la luminosité, en modifiant pour chaque pixel du symbole (110, 120, 160, 170, 210) de code - en partant respectivement des paramètres de pixels d'origine de l'objet-image (B1 à B5) - un nombre donné à l'avance de bits.

11. Agencement suivant la revendication 10,
**caractérisé en ce qu'**
- il y a un dispositif (40) de contrôle conformé de manière à détecter le symbole (110, 120, 160, 170, 210) de code contenu dans l'objet-image (B1 à B5) et à comparer l'état indiqué par le symbole (110, 120, 160, 170, 210) de code de l'élément (100, 130, 180) représenté ou de la partie représentée à l'état réel de l'élément (100, 130, 180) représenté ou de la partie représentée et à produire un signal de défaut, si les états diffèrent l'un de l'autre.
